# EUROPÄISCHE PATENTANMELDUNG

(11) **EP 1 463 014 A2**
(43) Veröffentlichungstag der Anmeldung: **29.09.2004**
(21) Anmeldenummer: 03104230.2
(22) Anmeldetag: 17.11.2003
(51) Int. Cl.: G08G 1/0969, G01C 21/36

(54) **Navigationsgerät zur Zielführung eines Kraftfahrzeuges**

(30) Priorität: 25.03.2003 DE 10313223
(71) Anmelder: ROBERT BOSCH GMBH, 70442 Stuttgart (DE)
(72) Erfinder: Placke, Lars, 30163 Hannover (DE); Smirnov, Lothar-Frank, 70567 Stuttgart (DE)

(57) **Zusammenfassung**

Um ein Navigationsgerät (100) zur Zielführung eines Kraftfahrzeugs zu schaffen, das dem Fahrzeugführer in allen Fahrsituationen eine gute Orientierung bietet und ihn möglichst wenig vom Straßenverkehr ablenkt, wird vorgeschlagen, dass das Navigationsgerät Mittel (12) zur automatischen Einstellung eines Darstellungsmaßstabs und eines Dimensionsgrads der Darstellung aufweist.

## Beschreibung

### Technisches Gebiet

Die Erfindung betrifft ein Navigationsgerät zur Zielführung eines Kraftfahrzeugs von einer momentanen Position zu einem eingestellten Ziel in einem Straßenverkehrsnetz mit einer Anzeigeeinrichtung zur Darstellung des Umfelds der momentanen Fahrzeugposition.

### Stand der Technik

Ein gattungsgemäßes Navigationsgerät ist beispielsweise aus der DE 195 37 255 A1 bekannt. Bei dem dort beschriebenen Navigationsgerät werden auf einer Anzeigeeinrichtung die momentane Position des Fahrzeugs sowie Straßenkarten oder Ausschnitte davon wiedergegeben. Der Maßstab der Straßenkarten wird in Abhängigkeit von der Geschwindigkeit des Fahrzeugs verändert, wobei bei einer höheren Fahrgeschwindigkeit ein größerer Maßstab gewählt wird, um dem Fahrzeugführer einen Überblick über einen großen Bereich des Straßensystems zu ermöglichen, und bei einer niedrigeren Geschwindigkeit ein kleinerer Maßstab gewählt wird, um dem Fahrer die Orientierung im engeren Umfeld zu erleichtern.

Grundsätzlich dienen Kartendarstellungen in Fahrzeugnavigationsgeräten dem Fahrzeugführer zu mehreren Zwecken. Zum einen unterstützen sie die Fahrzeugführung, indem sie beispielsweise Richtungsänderungen wie Abbiegehinweise vorausschauend darstellen. Zum Zweiten unterstützen sie den Fahrer bei der Orientierung im näheren und weiteren Umfeld um die aktuelle Fahrzeugposition herum, indem sie das Straßennetz oder die nähere Umgebung darstellen. Weiter beinhalten Fahrzeugnavigationsgeräte oft Infotainmenthinweise, wie beispielsweise Hinweise auf Tankstellen, Parkplätze oder Werkstätten, aber auch auf Sehenswürdigkeiten und andere potentiell interessierende Orte (so genannte Points of Interest).

### Darstellung der Erfindung

Der Erfindung liegt die Aufgabe zugrunde, ein Navigationsgerät der ei n-gangs genannten Art anzugeben, das dem Fahrzeugführer in allen Fahrsituationen eine gute Orientierung bietet und ihn möglichst wenig vom Straßenverkehr ablenkt. Diese Aufgabe wird durch die im Anspruch 1 angegebenen Merkmale gelöst. Vorteilhafte Ausgestaltungen und Weiterbildungen der Erfindung sind in den Unteransprüchen gekennzeichnet.

Die Erfindung geht dabei von der Beobachtung aus, dass in einer realen Verkehrssituation, insbesondere bei bewegtem Fahrzeug, die zur Verfügung stehende Zeitspanne zwischen der Darbietung einer Information oder eines Hinweises bezüglich der Fahrzeugführung, der Orientierung oder des Infotainments und dem Zeitpunkt, zu dem der Fahrer auf die Information reagieren muss, von entscheidender Bedeutung für die rechtzeitige Informationsverarbeitung durch den Fahrer ist. Sie stellt einen wichtigen Aspekt der verkehrssicheren Nutzung von Fahrzeugnavigationsgeräten dar. Diese Zeitspanne ist im bewegten Fahrzeug abhängig von der aktuell gefahrenen Geschwindigkeit, der gewählten Ausschnittsvergrößerung der Kartendarstellung und dem Ansichtsmodus.

Erfindungsgemäß weist ein gattungsgemäßes Navigationsgerät Mittel zur automatischen Einstellung eines Darstellungsmaßstabs und eines Dimensionsgrads der Darstellung auf. Dieses Einstellungsmittel schafft die Möglichkeit, die Ausschnittsvergrößerung der Kartendarstellung und den Ansichtsmodus jeglicher Art für die Fahraufgabe und die effiziente Informationsentnahme durch den Fahrer selbständig anzupassen.

Durch die Maßnahme des Anspruchs 2, nach der das Einstellungsmittel den Darstellungsmaßstab und den Dimensionsgrad der Darstellung auf Grundlage der momentanen Fahrzeuggeschwindigkeit, bevorzugt auf Grundlage der momentanen Fahrzeuggeschwindigkeit und von gespeicherten Umgebungsdaten einstellt, ist gewährleistet, dass die relevanten Informationen dem Fahrer so frühzeitig dargeboten werden, dass er sie angemessen verarbeiten und falls notwendig auf sie reagieren kann, ohne in einen verkehrsgefährdenden Zeitdruck zu geraten.

Da die Einstellung von Maßstab und Dimensionsgrad erfindungsgemäß ohne Eingreifen des Fahrers automatisch geschieht, entsteht keine zusätzliche Ablenkung des Fahrers von der Fahraufgabe durch die ansonsten notwendige manuelle Anpassung der Ausschnittsvergrößerung und des Ansichtsmodus an die Geschwindigkeit bzw. die Fahrzeugumgebung.

Besonders vorteilhaft ist die Maßnahme des Anspruchs 3, nach der das Einstellungsmittel bei niedrigen Fahrzeuggeschwindigkeiten eine dreidimensionale Darstellung und bei höheren Fahrzeuggeschwindigkeiten eine zweidimensionale Darstellung für die Anzeigeeinrichtung einstellt. Detailliertere Informationen können durch die räumliche Darstellung besser dargestellt werden, während die ebene Darstellung dem Fahrer eine bessere großräumige Übersicht verschafft.

Nach Patentanspruch 4 kann mit Vorteil vorgesehen sein, dass die gespeicherten Umgebungsdaten die Information enthalten, ob eine momentane Position sich in einem städtischen oder einem ländlichen Umfeld befindet. Derartige Umgebungsinformationen erlauben eine differenzierte und angepasste Einstellung von Darstellungsmaßstab und Dimensionsgrad der Darstellung.

So kann das Einstellungsmittel nach der vorteilhaften Maßnahme des Patentanspruchs 5 in städtischem Umfeld eine dreidimensionale Darstellung und in ländlichem Umfeld eine zweidimensionale Darstellung einstellen. Eine solche Einstellung trägt der Tatsache Rechnung, dass das Straßennetz in einem städtischen Umfeld in der Regel wesentlich dichter und komplexer aufgebaut ist als in einem ländlichen Umfeld und dass in einer Stadt eine große Zahl verschiedenartiger interessierender Orte auf der Kartenansicht gezeigt werden sollen.

Nach der besonders bevorzugten Maßnahme des Patentanspruchs 6 stellt das Einstellungsmittel in städtischem Umfeld bei niedrigen Fahrzeuggeschwindigkeiten eine dreidimensionale Darstellung und bei höheren Fahrzeuggeschwindigkeiten eine zweidimensionale Darstellung ein und stellt in ländlichem Umfeld stets eine zweidimensionale Darstellung ein. Diese Maßnahme zielt zusätzlich auf Situationen, bei denen das Fahrzeug mit vergleichsweise hoher Geschwindigkeit in städtischem Umfeld bewegt wird, wie etwa auf einer Stadtautobahn. Da dann die Umgebungsdetails für den Fahrer nicht von Bedeutung sind, wird wie bei der Fahrt in ländlichem Umfeld eine zweidimensionale ebene Darstellung gewählt.

Zusätzlich kann gemäß Patentanspruch 7 mit Vorteil vorgesehen sein, dass das Einstellungsmittel bei niedrigen Fahrzeuggeschwindigkeiten einen kleinen Darstellungsmaßstab und bei höheren Fahrzeuggeschwindigkeiten einen größeren Darstellungsmaßstab einstellt. Die Anpassung der Ausschnittsvergrößerung an die Geschwindigkeit kann dabei in vorher festgelegten Stufen erfolgen. Bei Überschreitung oder Unterschreitung einer entsprechenden Geschwindigkeit schaltet das Navigationsgerät dann auf einen nächstgrößeren oder nächstkleineren Abbildungsmaßstab um.

Alternativ kann die Änderung des Darstellungsmaßstabs, wie in Patentanspruch 8 angegeben, kontinuierlich bzw. stufenlos erfolgen. Dabei kommen verschiedene Zusammenhänge zwischen Ausschnittsvergrößerung und Fahrzeuggeschwindigkeit in Betracht. Beispielsweise kann der Abbildungsmaßstab in einem einfachen Fall linear mit der Fahrzeuggeschwindigkeit skalieren. Um die Detaildarstellung bei langsamer Fahrt zu verbessern, kann der Kartenausschnitt auch im niedrigen Geschwindigkeitsbereich bei Geschwindigkeitssteigerungen stärker vergrößert werden als im oberen Geschwindigkeitsbereich.

Gemäß Patentanspruch 9 weist das das Navigationssystem mit Vorteil ein Mittel zum Auswählen eines Geschwindigkeitsschwellwerts auf, bei dessen Über- oder Unterschreiten die Ansicht zwischen zweidimensionaler und dreidimensionaler Darstellung umgeschaltet wird. Der Fahrzeugführer kann somit die Umschaltung zwischen 2D- und 3D-Ansicht nach seinen Vorlieben und Bedürfnissen einstellen. Beispielsweise kann der Schwellwert relativ niedrig gewählt werden, wenn der Fahrer auch im Stadtgebiet häufig auf Ausfallstraßen oder Stadtautobahnen fährt, bei denen eine räumliche Darstellung nicht erforderlich oder gewünscht ist.

### Kurze Beschreibung der Zeichnungen

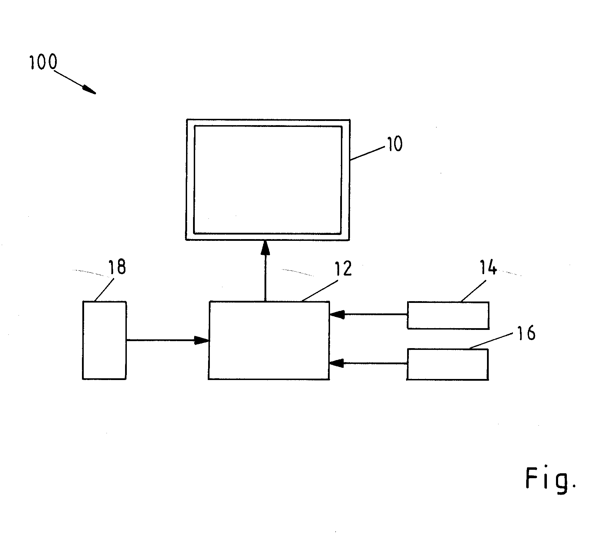

Ein Ausführungsbeispiel der Erfindung wird nachstehend anhand der Zeichnung näher erläutert. Die einzige Figur zeigt ein Blockschaltbild eines Navigationsgeräts nach einem Ausführungsbeispiel der Erfindung.

### Bester Weg zur Ausführung der Erfindung

Das in der einzigen Figur allgemein mit 100 bezeichnete Navigationsgerät enthält neben anderen Elementen, für die vorliegende Erfindung nicht wesentlich sind und auf deren Darstellung daher verzichtet ist, eine Anzeigeeinrichtung 10, beispielsweise einen TFT-LCD-Farbmonitor und ein Steuergerät 12. Das Steuergerät 12 erhält ein Geschwindigkeitssignal von einem Geschwindigkeitssensor 14 und Umgebungsdaten aus einer Datenleseeinrichtung 16.

Die Datenleseeinrichtung 16 kann beispielsweise durch ein CD- oder DVD-Lesegerät gebildet sein, in das ein Datenträger mit entsprechenden Umgebungsdaten eingebracht ist. Ebenso ist ein Datenbereitstellung über Netzdienste, beispielsweise Internet-Portale möglich. Dabei kann auch vorgesehen werden, die Daten direkt einzulesen, da davon auszugehen ist, daß die Daten in Zukunft auch vermehrt online versandt werden (z.B. Offboard-Navigation). Die Umgebungsdaten enthalten neben den üblichen Kartendarstellungen insbesondere die Information, ob sich eine momentane Position in einem städtischen oder einem ländlichen Umfeld befindet.

Die aktuelle Fahrzeugposition in bekannter Weise mit einem elektronischen Tachosignal, einem Gyro und einem von GPS (Global Positioning System)-Satelliten ausgestrahlten Signal bestimmt. Das Steuergerät 12 vergleicht diese Daten mit dem auf dem Datenträger gespeicherten Kartenmaterial und errechnet daraus die aktuelle Position des Fahrzeugs.

Über eine Bedienerschnittstelle 18 kann der Fahrzeuglenker dem Navigationsgerät 100 in bekannter Weise einen Zielort eingeben und die Zielführung starten. Darüber hinaus kann der Fahrzeuglenker einen Geschwindigkeitsschwellwert für die Umschaltung von ebener und räumlicher Darstellung eingeben, dessen Bedeutung weiter unten erläutert wird.

Im Betrieb werden die von der Datenleseeinrichtung 16 gelieferten Kartendarstellungen vom Steuergerät 12 auf der Anzeigeeinrichtung 10 unter Berücksichtigung des eingestellten Darstellungsmaßstabs und des eingestellten Dimensionsgrads der Darstellung zur Anzeige gebracht.

Nach der Erfindung wertet das Steuergerät dabei die von der Datenleseeinrichtung 16 mitübertragene Information über den Umgebungscharakter aus. Befindet sich das Fahrzeug in einem ländlichen Gebiet, so wird unabhängig von der Fahrzeuggeschwindigkeit eine ebene, zweidimensionale Darstellung für die Anzeige der Kartenausschnitte gewählt. Der Fahrer hat so Überblick über einen großen Bereich des ihn umgebenden Straßensystems.

Befindet sich das Fahrzeug in städtischem Umfeld, so wertet das Steuergerät 12 für die Wahl des Dimensionsgrads zusätzlich das Geschwindigkeitssignal des Geschwindigkeitssensors 14 aus. Überschreitet die momentane Fahrzeuggeschwindigkeit einen voreingestellten Schwellwert, so wird für die Kartendarstellung ebenfalls die ebene Darstellungsform gewählt. Der Schwellwert kann beispielsweise 65 km/h betragen. Er wird im städtischem Umfeld in der Regel nur dann überschritten, wenn das Fahrzeug auf einer breiten Ausfallstraße oder einer Stadtautobahn fährt, wo die Umgebungsdetails für den Fahrer nicht von Bedeutung sind.

Liegt die Fahrzeuggeschwindigkeit unterhalb des voreingestellten Schwellwerts, so wählt das Steuergerät 12 eine dreidimensionale Darstellung für die Umgebungsinformation, so dass detailliertere Informationen besser angezeigt werden können.

Es versteht sich, dass die Umschaltung der Darstellung zweckmäßig mit einer Hysterese vorgenommen wird, um ein mehrmaliges, kurz aufeinander folgendes Umschalten im Bereich der Schwellgeschwindigkeit zu vermeiden. Die Größe des Schwellwerts kann über die Bedienerschnittstelle 18 vom Fahrzeuglenker nach seinen Bedürfnissen und Wünschen verändert werden.

Zusätzlich zur Wahl eines Dimensionsgrads legt die Steuereinheit 12 einen Darstellungsmaßstab fest. Dabei wird der Darstellungsmaßstab mit steigender Fahrzeuggeschwindigkeit stufenlos erhöht (Zoom heraus) und bei sinkender Fahrzeuggeschwindigkeit stufenlos erniedrigt (Zoom hinein). Die Änderung des Darstellungsmaßstabs kann sowohl bei zweidimensionaler, als auch bei dreidimensionaler Darstellung erfolgen.

Auch hier können die Darstellungsparameter vom Benutzer eingestellt werden. Beispielsweise kann die Änderung des Darstellungsmaßstabs für die räumliche Darstellung abgeschaltet werden, so daß die Steuereinheit Maßstabsanpassungen nur bei einer ebenen Kartendarstellung vornimmt.

Während die Erfindung insbesondere mit Bezug auf ein bevorzugtes Ausführungsbeispiel gezeigt und beschrieben worden ist, versteht sich für den Fachmann, dass Änderungen in Gestalt und Einzelheiten gemacht werden können, ohne von dem Gedanken und Umfang der Erfindung abzuweichen. Beispielsweise kann bei der räumlichen Darstellung der Fahrzeugumgebung die Betrachtungshöhe über der Fahrzeugposition variabel sein, und beispielsweise zwischen einer auf Fahrzeughöhe liegenden Position und einer Vogelperspektive umschaltbar sein. Dementsprechend soll die Offenbarung der vorliegenden Erfindung nicht einschränkend sein. Statt dessen soll die Offenbarung der vorliegenden Erfindung den Umfang der Erfindung veranschaulichen, der in den nachfolgenden Ansprüchen dargelegt ist.

## Patentansprüche

1. Navigationsgerät zur Zielführung eines Kraftfahrzeugs von einer momentanen Position zu einem eingestellten Ziel in einem Straßenverkehrsnetz mit einer Anzeigeeinrichtung (10) zur Darstellung des Umfelds der momentanen Fahrzeugposition,
**dadurch gekennzeichnet,dass**
das Navigationsgerät Mittel (12) zur automatischen Einstellung eines Darstellungsmaßstabs und eines Dimensionsgrads der Darstellung aufweist.

2. Navigationsgerät nach Anspruch 1, **dadurch gekennzeichnet,dass**
das Einstellungsmittel (12) den Darstellungsmaßstab und den Dimensionsgrad der Darstellung auf Grundlage der momentanen Fahrzeuggeschwindigkeit, bevorzugt auf Grundlage der momentanen Fahrzeuggeschwindigkeit und von gespeicherten Umgebungsdaten einstellt.

3. Navigationsgerät nach Anspruch 2, **dadurch gekennzeichnet, dass**
das Einstellungsmittel (12) bei niedrigen Fahrzeuggeschwindigkeiten eine dreidimensionale Darstellung und bei höheren Fahrzeuggeschwindigkeiten eine zweidimensionale Darstellung für die Anzeigeeinrichtung (10) einstellt.

4. Navigationsgerät nach Anspruch 2, **dadurch gekennzeichnet, dass**
die gespeicherten Umgebungsdaten die Information enthalten, ob eine momentane Position sich in einem städtischen oder einem ländlichen Umfeld befindet.

5. Navigationsgerät nach Anspruch 4, **dadurch gekennzeichnet,dass**
das Einstellungsmittel (12) in städtischem Umfeld eine dreidimensionale Darstellung und in ländlichem Umfeld eine zweidimensionale Darstellung einstellt.

6. Navigationsgerät nach Anspruch 4, **dadurch gekennzeichnet,dass**
das Einstellungsmittel (12) in städtischem Umfeld bei niedrigen Fahrzeuggeschwindigkeiten eine dreidimensionale Darstellung und bei höheren Fahrzeuggeschwindigkeiten eine zweidimensionale Darstellung einstellt und in ländlichem Umfeld stets eine zweidimensionale Darstellung einstellt.

7. Navigationsgerät nach einem der Ansprüche 2 bis 6, **dadurch gekennzeichnet, dass**
das Einstellungsmittel (12) bei niedrigen Fahrzeuggeschwindigkeiten einen kleinen Darstellungsmaßstab und bei höheren Fahrzeuggeschwindigkeiten einen größeren Darstellungsmaßstab einstellt.

8. Navigationsgerät nach Anspruch 7, **dadurch gekennzeichnet, dass**
die Änderung des Darstellungsmaßstabs stufenlos erfolgt.

9. Navigationsgerät nach einem der Ansprüche 2 bis 8, **dadurch gekennzeichnet, dass**
das Navigationssystem Mittel (18) zum Auswählen eines Geschwindigkeitsschwellwerts aufweist, bei dessen Über- oder Unterschreiten die Ansicht zwischen zweidimensionaler und dreidimensionaler Darstellung umgeschaltet wird.
